# EUROPÄISCHE PATENTANMELDUNG

(11) **EP 3 712 582 A1**
(43) Veröffentlichungstag der Anmeldung: **23.09.2020**
(21) Anmeldenummer: 20161226.4
(22) Anmeldetag: 05.03.2020
(51) Int. Cl.: G01L 1/14, G01G 19/02, G01G 19/12, G01M 5/00

(54) **ANORDNUNG ZUM ERFASSEN EINER BELASTUNG EINES LASTTRAGENDEN BAUTEILS EINES KRAFTFAHRZEUGS UND ENTSPRECHENDES KRAFTFAHRZEUG**

(30) Priorität: 18.03.2019 DE 102019106808
(71) Anmelder: MAN Truck & Bus SE, 80995 München (DE)
(72) Erfinder: Karacan, Sertaç, 80995 München (DE); Maisel, Andreas, 80995 München (DE); Butz, Matthias, 80995 München (DE)
(74) Vertreter: v. Bezold & Partner Patentanwälte - PartG mbB

(57) **Zusammenfassung**

Die Erfindung betrifft eine Anordnung (10) zum Erfassen einer Belastung eines lasttragenden Bauteils (1) eines Kraftfahrzeugs. Hierzu umfasst die Anordnung - neben dem lasttragenden Bauteil (1) selbst-zwei von dem lasttragenden Bauteil (1) abstehende, vorzugsweise stiftförmige, Ansätze (2a, 2b). Weiterhin umfasst die Anordnung (10) eine, vorzugsweise kapazitive, Sensoreinrichtung (3), die mit den zwei Ansätzen (2a, 2b) verbunden ist und ausgebildet ist, die Belastung auf Basis einer Veränderungen der relativen Lage der zwei Ansätze (2a, 2b) zueinander zu ermitteln. Auf vorteilhafte Weise wird damit eine Anordnung (10) bereitgestellt, die ohne aufwendige Umbaumaßnahmen an einem bereits bestehenden Bauteil angebracht werden kann und damit eine einfache und kostengünstige Belastungsmessung von Fahrzeugbauteilen ermöglicht. Weiterhin betrifft die Erfindung auch ein Kraftfahrzeug mit einer entsprechenden Anordnung (10).

## Beschreibung

Die Erfindung betrifft eine Anordnung zum Erfassen einer Belastung eines lasttragenden Bauteils eines Kraftfahrzeugs, darunter z. B. ein Fahrwerksbauteil des Kraftfahrzeugs. Weiterhin betrifft die Erfindung ein Kraftfahrzeug mit einer entsprechenden Anordnung.

Besonders im Nutzfahrzeugbereich spielt das zuverlässige Messen von Belastungen an den Achsen, dem Fahrzeugrahmen und/oder an anderen lasttragenden Bauteilen eine wichtige Rolle. Aufgrund der in diesem Bereich meist hohen und zudem - z. B. aufgrund von Be- und Entladevorgängen - oftmals wechselnden Kräfte, unterliegen die Fahrzeugteile dort nämlich erfahrungsgemäß hohen Beanspruchungen, die zu deren Verschleiß und damit zu Gefahrensituationen (z. B. Achsbruch) führen können. Weiterhin stellt die Verteilung der Achslasten an den einzelnen Fahrzeugachsen eine entscheidende Größen zur Überprüfung der zulässigen Achslast und/oder des zulässigen Fahrzeuggesamtgewichts dar, was sich wiederum auf die Fahrzeugführung (z. B. Bremsverhalten, Befahrbarkeit von Brücken etc.) auswirkt. Ferner kann ein Fahrzeugführer bei genauer Kenntnis der einzelnen Achslasten seine Ladung besser organisieren.

Entsprechend ist es daher Aufgabe der Erfindung eine Lösung zur zuverlässigen Erfassung von Belastungen an lastragenden Fahrzeugteilen bereitzustellen. Insbesondere ist es dabei eine Aufgabe der Erfindung eine Möglichkeit zum einfachen Ausstatten bzw. Nachrüsten eines vorhandenen Bauteils zur Belastungserfassung bereitzustellen, ohne das umfassende, insbesondere das Bauteil stark schwächende, Umbauten vorgenommen werden müssen.

Diese Aufgaben werden durch eine Anordnung sowie ein Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Anordnung, vorzugsweise zum Erfassen einer Belastung eines lasttragenden Bauteiles eines Kraftfahrzeugs, z. B. eines Achskörpers, umfasst hierzu - neben dem lasttragenden Bauteil des Kraftfahrzeugs selbst - zwei von dem lasttragenden Bauteil abstehende, vorzugsweise stiftförmige, Ansätze. Diese Ansätze können in diesem Zusammenhang als Vorsprünge, Befestigungselemente, Ansatzstücke und/oder angesetzte Halteteile ausgeführt sein. Weiterhin können die Ansätze mit an sich im Stand der Technik bekannten Befestigungsmethoden (z. B. Schweißen, Kleben etc.) am lasttragenden Bauteil angebracht sein. Vorzugsweise handelt es sich bei dem lasttragenden Bauteil ferner um ein lasttragendes Bauteil eines Nutzfahrzeugs.

Zusätzlich dazu umfasst die Anordnung eine, vorzugsweise kapazitive, Sensoreinrichtung, die mit den zwei Ansätzen verbunden ist und ausgebildet ist, die Belastung auf Basis einer Veränderungen der relativen Lage der zwei Ansätze zueinander zu ermitteln. Mit anderen Worten ist die Sensoreinrichtung ausgebildet, Änderungen der Position und/oder Orientierung der beiden Ansätze zueinander, die sich unter dem Einfluss einer Belastung (Zug/Druck, Biegung, Scherung, Torsion) des Bauteils ergeben, zu erfassen und hieraus die Größe, Richtung und/oder Art der wirkenden Belastung zu bestimmen. Beispielsweise kann aus einem sich verkürzenden Abstand zwischen den beiden Ansätzen auf eine in Verbindungsrichtung der Ansätze wirkende Druckbelastung geschlossen werden, während ein sich vergrößernder Abstand auf eine Zugbelastung schließen lässt. In diesem Zusammenhang können die beiden Ansätze somit auch als Messstellen und/oder Messpunkte bezeichnet werden.

Auf vorteilhafte Weise wird damit eine Anordnung bereitgestellt, die ohne aufwendige Umbaumaßnahmen an einem bereits bestehenden Bauteil angebracht werden kann und damit eine einfache und kostengünstige Belastungsmessung von Fahrzeugbauteilen ermöglicht. Insbesondere durch das äußere Befestigen der Ansätze bzw. der Sensoreinrichtung an dem lasttragenden Bauteil können dabei Umbauten, die das Bauteil schwächen würden, z. B. das Anbringen von Ausnehmungen, Öffnungen etc., vermieden werden. Die erfasste Belastung eines lasttragenden Bauteil mittels der vorstehend erwähnten Anordnung kann ferner auch auf vorteilhafte Weise zur Ermittlung von Achslasten und/oder Radlasten des Kraftfahrzeugs verwendet werden. Mit anderen Worten kann die erfindungsgemäße Anordnung vorzugsweise auch eine Anordnung zum Ermitteln einer Achslast und/oder Radlast sein.

Gemäß einem ersten Aspekt der Erfindung kann die Sensoreinrichtung ausgebildet sein, die Belastung mit einem kapazitiven Messprinzip, vorzugsweise unter Verwendung eines kapazitiven Drucksensors und/oder kapazitiven Kraftsensors, zu erfassen. Mit anderen Worten kann die Sensoreinrichtung ausgebildet sein, eine Belastungsmessung, eine Messung der auf das Bauteil einwirkenden Kräfte, auf Basis einer Veränderung einer elektrischen Kapazität eines Kondensators oder eines Kondensatorsystems vorzunehmen. Hierzu ist die Verbindung und/oder funktionelle Kopplung der beiden Ansätze mit der Sensoreinrichtung vorzugsweise derart ausgeführt, dass sich eine relative Lageänderung der zwei Ansätze in entsprechende Kapazitätsänderung der Sensoreinrichtung übersetzt. Beispielsweise kann eine relative Lageänderung der zwei Ansätze hierbei eine Verformung bzw. Verschiebung von Kondensatorplatten und/oder eine Änderung der Dielektrizitätskonstante im Bereich der Sensoreinrichtung bewirken. Auf vorteilhafte Weise wird dadurch ein sensibles Erfassen von an dem Bauteil wirkende Belastungen ermöglicht, wobei zudem oder alternativ auch andere Messverfahren, z. B. induktive Sensoren, verwendet werden können.

Nach einem weiteren Aspekt der Erfindung kann die Sensoreinrichtung, vorzugsweise ausschließlich, mittels der zwei Ansätze am lasttragenden Bauteil gehaltert sein. Hierzu können die Ansätze jeweils z. B. entsprechende Vorsprünge und/oder Abstufungen umfassen, mittels derer ein Verklemmen der Sensoreinrichtung am lasttragenden Bauteil ermöglicht wird. Zudem oder alternativ können die Ansätze zum Zwecke der Halterung der Sensoreinrichtung auch andere Steck-, Rast-, Press-, Spann-, Schraub und/ oder Klemmeinrichtungen umfassen. Entsprechend übernehmen die beiden Ansätze insgesamt eine Doppelfunktion: Zum einen dienen sie als Messstellen für die Belastungserfassung, zum anderen zur Halterung der Sensoreinrichtung am lastragenden Bauteil. Auf vorteilhafte Weise können dadurch auf zusätzliche Halterungs- bzw. Befestigungsmittel für die Sensoreinrichtung verzichtet werden, was insgesamt die Montage der Anordnung vereinfacht.

Zwar kann es sich gemäß dem Grundgedanken der Erfindung bei dem lasttragenden Bauteil um jedes Bauteil des Kraftfahrzeugs handeln, das eine tragende Funktion erfüllt (d. h. ein Bauteil, das von außen wirkende Lasten aufnehmen bzw. weiterleiten kann), jedoch können gemäß einem weiteren Aspekt der Erfindung auch spezielle Ausgestaltungsformen des Bauteils vorgesehen sein. So kann das lasttragende Bauteil vorzugsweise ein Fahrwerksbauteil, ein Achskörper, eine Vorderachse, eine Hinterachse, ein Achsgehäuse einer Hypoid- oder Außenplanetenachse und/oder ein Achsschenkel sein. Zudem oder alternativ kann es sich bei dem lasttragende Bauteil auch um eine Radaufhängung, einen Federträger und/oder eine Federung handeln. Gerade die vorgenannten Bauteilen unterliegen erfahrungsgemäß meist hohen Beanspruchungen, weshalb sich eine entsprechende Erfassung der Belastung hier als besonders vorteilhaft erweist.

Nach einem weiteren Aspekt der Erfindung können die zwei Ansätze im Wesentlichen in dieselbe Richtung ausgerichtet sein. Mit anderen Worten können die zwei Ansätze ausgehend von ihrer jeweiligen Befestigungsstelle am lastragenden Bauteil im Wesentliche in gleicher Orientierung abstehen, wobei unter dem Begriff "abstehen" allgemein ein in einem bestimmten Winkel vom lasttragenden Bauteil Wegzeigen verstanden werden kann. In einer bevorzugten Ausführungsform stehen die zwei Ansätze dabei im Wesentlichen senkrecht zur Oberfläche des lasttragenden Bauteils, d. h. in einem Winkel von 90°, ab. Zudem oder alternativ können die zwei Ansätze dabei auch parallel zueinander orientiert sein. Auf vorteilhafte Weise ermöglicht dies ein möglichst einfaches Anbringen der Sensoreinrichtung, da hierdurch beispielsweise ein Verkanten vermieden wird.

Gemäß einem weiteren Aspekt der Erfindung können die zwei Ansätze jeweils kraft-, form- und/oder stoff-schlüssig an dem lasttragenden Bauteil befestigt sein. Beispielsweise können die zwei Ansätze am lasttragenden Bauteil angeschweißt, angeschraubt und/oder angeklebt sein. Hierbei kann jeder der beiden Ansätze sowohl mittels denselben oder aber mittels unterschiedlicher Verbindungstechniken befestigt sein. Zudem oder alternativ können die zwei Ansätze nicht einstückig mit dem lasttragenden Bauteil ausgebildet sein. Mit anderen Worten kann es sich bei den zwei Ansätzen somit um ursprünglich vom lasttragenden Bauteil separate Komponenten handeln, die erst nachträglich am lasttragenden Bauteil angebracht wurden. Auf vorteilhafte Weise wird dadurch ein einfaches Nachrüsten bestehender Bauteile mit einer Anordnung zur Belastungserfassung ermöglicht.

Nach einem weiteren Aspekt der Erfindung können die zwei Ansätze jeweils in Form einer Schraube und/oder eines Schraubstifts ausgebildet sein, die jeweils in entsprechende Bohrungen des lasttragenden Bauteils verschraubt sind. Beispielsweise können hierzu am lasttragenden Bauteil entsprechende Sack- oder Durchgangslöcher mit Gewinde angebracht sein. Der Vorteil dieser Variante liegt darin, dass dadurch eine besonders einfache und kostengünstige Möglichkeit zur Bereitstellung und Befestigung der Ansätze erreicht wird.

Gemäß einem hierzu alternativen Aspekts können die zwei Ansätze jeweils auch in Form eines Zwischenelements ausgebildet sein. Das Zwischenelement kann hierbei einen an einer Grundplatte angeordneten Vorsprung, vorzugsweise in Form eines Stiftes und/oder Bolzens, umfassen. Vorzugsweise sind die Grundplatte und der Vorsprung dabei einstückig ausgebildet. Weiterhin kann das Zwischenelement mittels der Grundplatte am lasttragenden Bauteil befestigt (z. B. verschweißt) sein. In einer lediglich beispielhaften Ausgestaltungsform dieses Aspekts kann das Zwischenelement dabei z. B. ein Bolzen mit Kopf sein, wobei der Bolzen mittels des Bolzenkopfs am lasttragenden Bauteil fixiert ist. Weiterhin kann der Vorsprung auch ein Gewinde umfassen, auf das beispielsweise ein Mutter oder ein anderes Sicherungselement zur Fixierung der Sensoreinrichtung aufgeschraubt werden kann. Auf vorteilhafte Weise wird dadurch insgesamt eine einfache und kostengünstige Realisierung der Ansätze ermöglicht.

Nach einer Weiterbildung dieses Aspekts können die Zwischenelemente jeweils auch in Form eines Tellerstifts ausgebildet sein. Mit anderen Worten können die Zwischenelemente jeweils aus einem Schaft und einem tellerartigen Kopf (z. B. in Form einer flachen Metallplatte) zusammengesetzt sein. Zudem oder alternativ kann die Grundplatten des Zwischenelements bzw. der tellerartige Kopf dabei am lasttragenden Bauteil auch verschweißt und/oder verklebt sein. Auf vorteilhafte Weise wird dadurch ebenfalls eine einfache und einfach Realisierung bzw. Befestigung der Ansätze ermöglicht.

Gemäß einem weiteren Aspekt der Erfindung kann die Anordnung ferner zumindest ein Sicherungselement umfassen, mittels dem ein Lösen der Verbindung zwischen der Sensoreinrichtung und den zwei Ansätzen verhindert werden kann. Beispielsweise kann das Sicherungselement (z. B. in Form einer Mutter und/oder einer Schutzkappe) an einem Endbereich eines oder beider Ansätze angebracht sein, um damit ein ungewolltes selbsttätiges Lösen der Sensoreinrichtung von den zwei Ansätzen zu verhindern. Auf vorteilhafte Weise wird dadurch eine sichere Fixierung der Sensoreinrichtung am lasttragenden Bauteil erreicht.

Nach einem weiteren Aspekt der Erfindung können die zwei Ansätze an einer Außenfläche des lasttragenden Bauteils befestigt sein. Dabei soll unter der Außenfläche des lasttragenden Bauteils, die das Bauteil zur Umgebung begrenzende (Ober-)Fläche und/oder die von außen sichtbare Ummantelung bzw. Verkleidung verstanden werden. Auf vorteilhafte Weise ermöglicht dies eine einfache und schnellem Zugänglichkeit der entsprechenden Bauteile, insbesondere im Fall von Reparaturen. Zudem oder alternativ können die zwei Ansätze dabei auch nach außen vom lasttragenden Bauteil abstehen. Anders ausgedrückt können die zwei Ansätze - ausgehend von ihrer jeweiligen Befestigungsstelle - "vom Bauteil weg" orientiert sein. Auch dies fördert auf vorteilhafte Weise die Zugänglichkeit der Anordnung. Zudem oder alternativ können die zwei Ansätze nicht in einer oder mehreren Öffnungen des lasttragenden Bauteils befestigt sein. Dadurch wird auf vorteilhafte Weise eine Schwächung des Bauteils verhindert.

Gemäß einem weiteren Aspekt der Erfindung können die zwei Ansätze auch in einem Abstand von weniger als 30 cm, vorzugsweise weniger als 20 cm, besonders bevorzugst weniger als 10 cm, zueinander angeordnet sein.

Um auch Lastverteilungen entlang eines Bauteils zu erfassen, kann nach einem weiteren Aspekt der Erfindung die Anordnung zumindest zwei weitere vom lasttragenden Bauteil abstehende Ansätze und zumindest eine weitere Sensoreinrichtung umfassen. Mit anderen Worten kann die Anordnung damit insgesamt zumindest zwei paarweise vom lasttragenden Bauteil abstehende Ansätze und zwei Sensoreinrichtungen umfassen. Hierbei kann die zumindest eine weitere Sensoreinrichtung mit den zumindest zwei weiteren Ansätzen verbunden sein und ausgebildet sein, die Belastung auf Basis einer Veränderungen der relativen Lage der zumindest zwei weiteren Ansätze zueinander zu ermitteln. Anders ausgedrückt kann die Anordnung zumindest zwei Sensor-Ansatz-Einheiten umfassen, wobei jeder Sensor-Ansatz-Einheit je zwei Ansätze und eine mit diesen Ansätzen verbundene Sensoreinrichtung zugeordnet sind. Vorzugsweise sind die Sensor-Ansatz-Einheiten dabei beabstandet zueinander am lasttragenden Bauteil angebracht. Auf vorteilhafte Weise wird dadurch insgesamt ein genaueres Erfassen der Belastung, insbesondere auch ein Erfassen von Lastverteilungen ermöglicht.

Gemäß einem weiteren Aspekt der Erfindung kann das lasttragende Bauteil ein T-Träger, vorzugsweise ein Doppel-T-Träger, sein. Zudem oder alternativ kann das lasttragende Bauteil auch zumindest abschnittsweise als ein T-Träger, vorzugsweise als ein Doppel-T-Träger, ausgebildet sein. Beispielsweise kann es sich hierbei um einen T-Träger einer Vorderachse eines Nutzfahrzeugs handeln. Weiterhin können die zwei Ansätze dabei an einem mittleren Bereich des T-Trägers befestigt sein. Die Angabe "mittlerer Bereich" soll sich hierbei in erster Linie auf die Längsrichtung des Trägers beziehen. Mit anderen Worten kann jeder Ansatz zu seinem nächstliegenden Trägerlängsende einen größeren Abstand als zur Trägerlängsmitte aufweisen. Zudem oder alternativ können die zwei Ansätze auch innerhalb der T-Form befestigt sein. Beispielsweise können die zwei Ansätze an einem Steg des T-Trägers, vorzugsweise des Doppel-T-Trägers, befestigt sein. Der Begriff "Steg" soll hierbei in seiner üblichen Bedeutung das die Flansche bzw. Gurte verbindende, vorzugsweise vertikale, Mittelteil des Trägers bezeichnen.

Alternativ kann das lasttragende Bauteil auch ein Achsgehäuse einer Hypoidachse oder Außenplanetenachse sein. Vorzugsweise umfasst das Achsgehäuse dabei einen, z. B. in einem mittleren Achsgehäuseabschnitt angeordneten, Achsgehäusebereich zur Aufnahme eines Ausgleichsgetriebes. Dabei kann eine Sensor-Ansatz-Einheit in einem Bereich zwischen dem Achsgehäusebereich zur Aufnahme eines Ausgleichsgetriebes und einem ersten Endbereich der Hypoid- oder Außenplanetenachse angeordnet sein und eine weitere Sensor-Ansatz-Einheit in einem Bereich zwischen dem Achsgehäusebereich zur Aufnahme eines Ausgleichsgetriebes und einem zweiten Endbereich der Hypoid- oder Außenplanetenachse.

Ferner betrifft die Erfindung ein Kraftfahrzeug, vorzugsweise Nutzfahrzeug, wie z. B. einen Lastkraftwagen, Sattelzug und/oder Omnibus, umfassend eine Anordnung zum Erfassen einer Belastung eines lasttragenden Bauteils des Kraftfahrzeugs wie in diesem Dokument beschreiben. Hierbei versteht sich, dass das Kraftfahrzeugs auch ein entsprechende lastragendes Bauteil, darunter beispielsweise ein Fahrwerksbauteil und/oder einen Achskörper, umfasst.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: Eine Explosionsdarstellung einer Anordnung zum Erfassen einer Belastung eines lasttragenden Bauteils eines Kraftfahrzeugs gemäß einer ersten Ausführungsform der Erfindung;
- Figur 2:: Eine Explosionsdarstellung einer Anordnung zum Erfassen einer Belastung eines lasttragenden Bauteils eines Kraftfahrzeugs gemäß einer zweiten Ausführungsform der Erfindung;
- Figur 3:: Eine Explosionsdarstellung einer Anordnung zum Erfassen einer Belastung eines lasttragenden Bauteils eines Kraftfahrzeugs gemäß einer dritten Ausführungsform der Erfindung; und
- Figur 4:: Eine schematische Darstellung eines Kraftfahrzeugs mit einer entsprechenden An-ordnung zum Erfassen einer Belastung eines lasttragenden Bauteils gemäß einer ersten Ausführungsform der Erfindung.

Gleiche oder funktional äquivalente Elemente sind dabei in allen Figuren mit denselben Bezugszeichen bezeichnet und zum Teil nicht gesondert beschrieben.

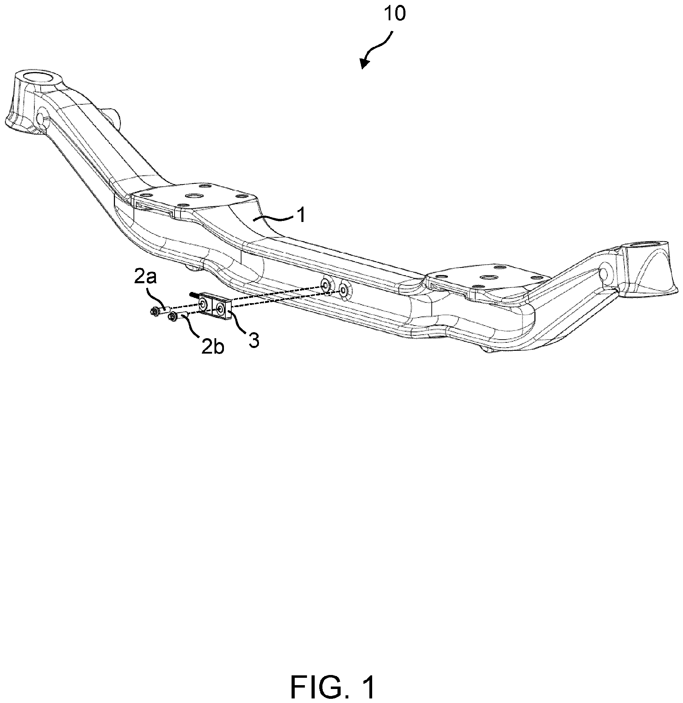

Figur 1 zeigt eine Explosionsdarstellung einer Anordnung 10 zum Erfassen einer Belastung eines lasttragenden Bauteils 1 eines Kraftfahrzeugs 20 gemäß einer ersten Ausführungsform der Erfindung. Hierbei umfasst die Anordnung 10 ein lasttragendes Bauteil 1 des Kraftfahrzeugs 20, vorliegend eine Starrachse, die abschnittsweise als Doppel-T-Träger ausgeführt ist. Ferner umfasst die Anordnung 10 zwei von dem lasttragenden Bauteil 1 abstehende und hier in Form zweier Schrauben ausgebildete Ansätze 2a und 2b, die jeweils in entsprechenden am lasttragenden Bauteil 1 angebrachten Bohrungen verschraubt sind. Vorzugsweise sind die Bohrungen (und damit die Ansätze 2a, 2b) in einem mittleren Bereich der Starrachse angeordnet und/oder in Trägerlängsrichtung zueinander versetzt.

Weiterhin wird mittels der beiden Ansätze 2a, 2b eine Sensoreinrichtung 3 - die ebenfalls Teil der besagten Anordnung 10 ist - am lasttragenden Bauteil 1 fixiert. Hierzu kann die quaderförmige Sensoreinrichtung 3 zwei an den Abstand und die Größe der beiden Schrauben angepasste Durchgangsöffnungen umfassen, durch die die Schrauben geführt sind. Ähnlich einer Unterlegscheibe wird somit im montierten Zustand die Sensoreinrichtung 3 auf vorteilhafte Weise zwischen den Schraubenköpfen und dem lasttragenden Bauteil 1 verspannt, ohne dass zusätzliche Vorrichtungen zu Halterungen der Sensoreinrichtung 3 nötig sind.

Neben der Halterung der Sensoreinrichtung 3 dienen die beiden Ansätze 2a, 2b ferner auch als Messstellen zur Erfassung der Belastung des lasttragenden Bauteils 1 durch die Sensoreinrichtung 3. Hierzu steht die Sensoreinrichtung 3 mittels der jeweils die Schrauben umgebenden Durchgangsöffnungen mit den Ansätzen 2a, 2b in Kontakt. D. h. mit anderen Worten ist die Sensoreirichtung 3 mit den beiden Ansätzen 2a, 2b verbunden. Weiterhin soll die Sensoreinrichtung 3 ausgebildet sein, die Belastung auf Basis einer Veränderungen der relativen Lage der zwei Ansätze 2a, 2b zueinander zu ermitteln. Beispielsweise kann die Sensoreinrichtung 3 ausgebildet sein, die auf das lasttragende Bauteil 1 einwirkenden Belastung mit einem kapazitiven Messprinzip, d. h. auf Basis einer Veränderung einer elektrischen Kapazität eines Kondensators oder eines Kondensatorsystems vorzunehmen. Hierzu kann die Verbindung und/oder funktionelle Kopplung der beiden Ansätze 2a, 2b mit der Sensoreinrichtung 3 vorzugsweise derart ausgeführt sein, dass sich eine relative Lageänderung der zwei Ansätze 2a, 2b entsprechende Kapazitätsänderung der Sensoreinrichtung 3 übersetzt. Beispielsweise kann eine relative Lageänderung der zwei Ansätze 2a, 2b hierbei eine Verformung bzw. Verschiebung von Kondensatorplatten und/oder eine Änderung der Dielektrizitätskonstante im Bereich der Sensoreinrichtung 3 bewirken. Auf vorteilhafte Weise wird dadurch ein sensibles Erfassen von auf die Starrachse einwirkende Belastungen ermöglicht. Zudem oder alternativ können hierbei durch eine Kombination mit weiteren Sensordaten (z. B. von zusätzlichen Beschleunigungs- und/oder Neigungssensoren) und/oder durch entsprechendes Positionieren der Anordnung 10 auch Radlasten zuverlässig erfasst werden.

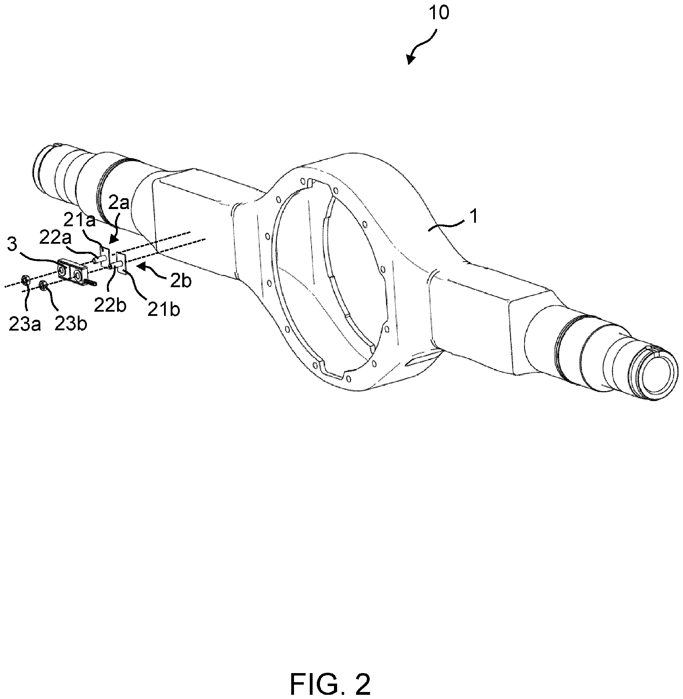

Figur 2 zeigt eine Explosionsdarstellung einer Anordnung 10 zum Erfassen einer Belastung eines lasttragenden Bauteils 1 eines Kraftfahrzeugs 20 gemäß einer zweiten Ausführungsform der Erfindung. Im Gegensatz zur vorstehenden Ausführungsbeispiel handelt es sich bei dem lasttragenden Bauteil 1 hier um ein Achsgehäuse einer Hypoidachse, wie sie beispielsweise als Hinterachse im Nutzfahrzeugbereich verwendet wird. Wiederum umfasst die Anordnung 10 - neben dem lasttragenden Bauteil 1 selbst - zwei von dem lasttragenden Bauteil 1 abstehende Ansätze 2a und 2b, wobei letztere hier nun als Zwischenelemente ausgebildet sind. Jedes Zwischenelement bestehend dabei aus einer Grundplatte 21a, 21b mit einem daran angeordneten, vorzugsweise stiftförmigen, Vorsprung 22a, 22b. Während die Vorsprünge 22a, 22b dabei vorrangig zum Haltern einer - analog zu Figur 1 ausgebildeten - Sensoreinrichtung 3 sowie als deren Messstellen dienen, können die jeweiligen Grundplatten 21a, 21b zur Befestigung der Zwischenelemente am lasttragenden Bauteils 1 verwendet werden. Dies kann beispielsweise durch ein Verschweißen oder Verkleben erfolgen. Auf vorteilhafte Weise kann damit ein bestehendes Bauteil, wie vorliegend das Achsgehäuse, mit einer erfindungsgemäßen Anordnung 10 nachgerüstet werden, ohne dass hierfür das Bauteil schwächende Umbauten, wie z. B. das Anbringen von Ausnehmungen, Öffnungen etc., nötig sind.

Weiterhin können die Vorsprünge 22a, 22b der Zwischenelemente jeweils ein Gewinde umfassen, auf das jeweils ein Sicherungselement 23a, 23b - hier in Form einer Mutter - befestigt werden kann, um dadurch ein ungewolltes selbsttätiges Lösen der Sensoreinrichtung 3 von den zwei Ansätzen 2a, 2b - im Speziellen von den beiden Vorsprüngen 22a, 22b - zu verhindern. Ähnlich zu den Schraubenköpfen der in Figur 1 gezeigten Variante kann die Sensoreinrichtung 3 somit auch mittels der Sicherungselemente 23a, 23b sicher am lasttragenden Bauteil 1 verspannt werden, wodurch auch hier auf zusätzliche Vorrichtungen zu Halterungen der Sensoreinrichtung 3 verzichtet werden kann.

In diesem Zusammenhang sei ferner erwähnt, dass es durchaus vorteilhaft ist, die beiden Ansätze 2a und 2b in derselben Art und Weise auszuführen (z. B. beide in Form von Schrauben wie in Figur 1 oder beide in Form von Zwischenelementen wie in Figur 2), dennoch können die zwei Ansätze 2a, 2b im Rahmen der Erfindung auch unterschiedlich ausgebildet sein. Beispielsweise kann nur einer der Ansätze 2a, 2b als Zwischenelement ausgebildet sein, während der zweite der Ansätze 2a, 2b ein am Bauteil bereits vorhandener Vorsprung ist. Weiterhin ermöglicht eine in den Figuren 1 und 2 gezeigte im Wesentlichen parallele Orientierung der zwei Ansätze 2a, 2b zwar ein möglichst einfache Montage, jedoch können hierbei auch andere Ausrichtungen der Ansätze 2a, 2b gewählt werden, ohne den Bereich der Erfindung zu verlassen. Beispielsweise können die beiden Ansätze 2a und 2b somit auch in einen gewissen Winkel zueinander stehen.

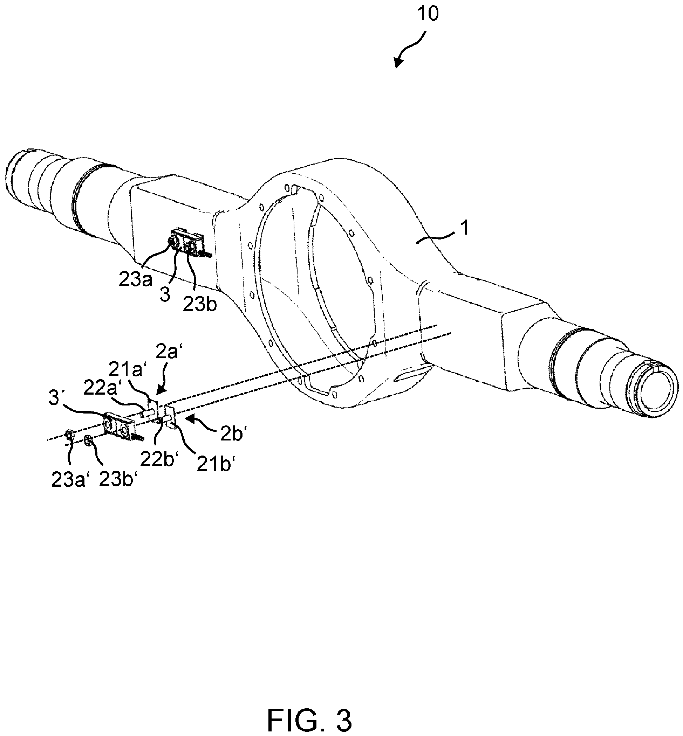

Figur 3 zeigt eine Explosionsdarstellung einer Anordnung 10 zum Erfassen einer Belastung eines lasttragenden Bauteils 1 eines Kraftfahrzeugs 20 gemäß einer dritten Ausführungsform der Erfindung. Diese unterscheidet sich jedoch von der in Figur 2 gezeigten Variante lediglich durch eine zusätzliche Sensor-Ansatz-Einheit, die zwei weitere vom lasttragenden Bauteil 1 abstehende Ansätze 2a', 2b' und eine weitere Sensoreinrichtung 3' umfasst. Dabei ist die weitere Sensoreinrichtung 3' mit den zwei weiteren Ansätzen 2a' und 2b' verbunden sowie ausgebildet, die Belastung auf Basis einer Veränderungen der relativen Lage der zwei weiteren Ansätze 2a' und 2b' zueinander zu ermitteln. Mit anderen Worten umfasst die in Figur 3 gezeigte Anordnung 10 somit zwei paarweise (= insgesamt vier) vom lasttragenden Bauteil 1 abstehende Ansätze 2a, 2b, 2a', 2b' sowie zwei, vorzugsweise kapazitive, Sensoreinrichtungen 3 und 3'. Dabei bilden jeweils zwei Ansätze 2a, 2b bzw. 2a', 2b' und eine jeweils zwei Ansätzen 2a, 2b bzw. 2a', 2b' zugeordnete Sensoreinrichtung 3 bzw. 3' eine Sensor-Ansatz-Einheit. Vorzugsweise sind die Sensor-Ansatz-Einheiten dabei beabstandet zueinander am lasttragenden Bauteil 1 angebracht. Vorliegend ist beispielsweise eine Sensor-Ansatz-Einheit in einem Bereich zwischen einem mittleren Achsgehäusebereich zur Aufnahme eines Ausgleichsgetriebes und einem ersten Endbereich der Hypoidachse angeordnet und eine weitere Sensor-Ansatz-Einheit in einem Bereich zwischen dem mittleren Achsgehäusebereich zur Aufnahme eines Ausgleichsgetriebes und einem zweiten Endbereich der Hypoidachse angeordnet. Auf vorteilhafte Weise wird dadurch auch ein genaues Erfassen von Lastverteilungen am Bauteil ermöglicht, wobei die Anordnung 10 in diesem Zusammenhang auch noch weitere Sensor-Ansatz-Einheiten umfassen kann.

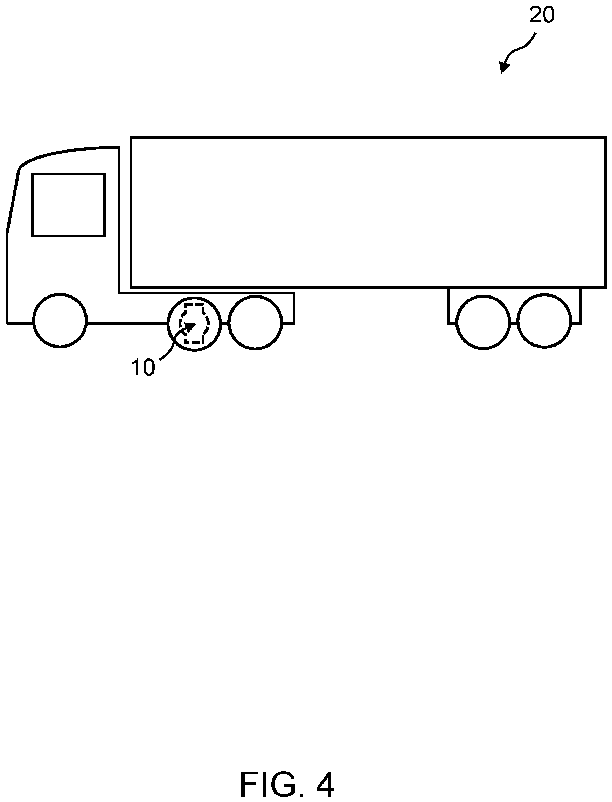

Figur 4 zeigt eine schematische Darstellung eines Kraftfahrzeugs 20 mit einer entsprechenden Anordnung 10 zum Erfassen einer Belastung eines lasttragenden Bauteils 1 gemäß einer ersten Ausführungsform der Erfindung. Vorliegend handelt es sich bei dem Kraftfahrzeug 20 dabei beispielhaft um ein Nutzfahrzeug, im Speziellen um einen Sattelzug aus Sattelzugmaschine und Sattelauflieger. Daneben kann das Kraftfahrzeug 20 jedoch auch ein Personenkraftwagen, ein Lastkraftwagen, ein Omnibus oder jede andere Art von motorisch angetriebenes, nicht schienengebundenes Fahrzeug sein.

Der Sattelzug umfasst vorliegend ein lasttragendes Bauteil 1 in Form einer Hinterachse, an der zwei - nicht näher dargestellte - Ansätze 2a und 2b befestigt sind. Weiterhin ist eine, vorzugsweise kapazitive, Sensoreinrichtung 3 mit den zwei Ansätzen 2a, 2b verbunden und ausgebildet, die Belastung auf Basis einer Veränderungen der relativen Lage der zwei Ansätze 2a, 2b zueinander zu ermitteln. Beispielsweise kann die Hinterachse bzw. die Anordnung 10 hierbei wie zuvor in Figur 2 oder 3 gezeigt ausgebildet sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Lasttragendes Bauteil
- 2a, 2a', 2b, 2b': Ansatz
- 3, 3': Sensoreinrichtung
- 21a, 21a', 21b, 21b': Grundplatte
- 22a, 22a', 22b, 22b': Vorsprung
- 23a, 23a', 23b, 23b': Sicherungselement
- 10: Anordnung
- 20: Kraftfahrzeug

## Patentansprüche

1. Anordnung (10) zum Erfassen einer Belastung eines lasttragenden Bauteils (1) eines Kraftfahrzeugs (20), vorzugsweise eines Nutzfahrzeugs, umfassend:
a) das lasttragende Bauteil (1) des Kraftfahrzeugs (20);
b) zwei von dem lasttragenden Bauteil (1) abstehende Ansätze (2a, 2b); und
c) eine, vorzugsweise kapazitive, Sensoreinrichtung (3), die mit den zwei Ansätzen (2a, 2b) verbunden ist und ausgebildet ist, die Belastung auf Basis einer Veränderungen der relativen Lage der zwei Ansätze (2a, 2b) zueinander zu ermitteln.

2. Anordnung (10) nach Anspruch 1, **dadurch gekennzeichnet, dass** die Sensoreinrichtung (3) ausgebildet ist, die Belastung mit einem kapazitiven Messprinzip, vorzugsweise unter Verwendung eines kapazitiven Drucksensors und/oder kapazitiven Kraftsensors, zu erfassen.

3. Anordnung (10) nach einem der vorherigen Ansprüche, **dadurch gekennzeichnet, dass** die Sensoreinrichtung (3), vorzugsweise ausschließlich, mittels der zwei Ansätze (2a, 2b) am lasttragenden Bauteil (1) gehaltert ist.

4. Anordnung (10) nach einem der vorherigen Ansprüche, **dadurch gekennzeichnet, dass** das lasttragende Bauteil (1) ein Fahrwerksbauteil, eine Radaufhängung, ein Achskörper und/oder ein Federträger ist.

5. Anordnung (10) nach einem der vorherigen Ansprüche, **dadurch gekennzeichnet, dass** die zwei Ansätze (2a, 2b) im Wesentlichen in dieselbe Richtung ausgerichtet sind und/oder parallel zueinander orientiert sind.

6. Anordnung (10) nach einem der vorherigen Ansprüche, **dadurch gekennzeichnet, dass** die zwei Ansätze (2a, 2b) jeweils
a) kraft-, form- und/oder stoff-schlüssig an dem lasttragenden Bauteil (1) befestigt sind; und/oder
b) nicht einstückig mit dem lasttragenden Bauteil (1) ausgebildet sind.

7. Anordnung (10) nach einem der vorherigen Ansprüche, **dadurch gekennzeichnet, dass** die zwei Ansätze (2a, 2b) jeweils in Form einer Schraube und/oder eines Schraubstifts ausgebildet sind, die jeweils in entsprechenden Bohrungen des lasttragenden Bauteils (1) verschraubt sind.

8. Anordnung (10) nach einem der Ansprüche 1 bis 5, **dadurch gekennzeichnet, dass** die zwei Ansätze (2a, 2b) jeweils in Form eines Zwischenelements ausgebildet sind, wobei jedes Zwischenelement einen an einer Grundplatte (21a, 21b) angeordneten Vorsprung (22a, 22b), vorzugsweise einen Stift, umfasst und mittels der Grundplatte (21a, 21b) am lasttragenden Bauteil (1) befestigt ist.

9. Anordnung (10) nach Anspruch 8, **dadurch gekennzeichnet, dass** die Zwischenelemente jeweils in Form eines Tellerstifts ausgebildet sind und/oder deren Grundplatten (21a, 21b) am lasttragenden Bauteil (1) verschweißt und/oder verklebt sind.

10. Anordnung (10) nach einem der vorherigen Ansprüche, **gekennzeichnet durch** zumindest ein Sicherungselement (23a, 23b), mittels dem ein Lösen der Verbindung zwischen der Sensoreinrichtung (3) und den zwei Ansätzen (2a, 2b) verhindert wird.

11. Anordnung (10) nach einem der vorherigen Ansprüche, **dadurch gekennzeichnet, dass** die zwei Ansätze (2a, 2b) an einer Außenfläche des lasttragenden Bauteils (1) befestigt sind und/oder nicht in Öffnungen des lasttragenden Bauteils (1) befestigt sind und/oder nach außen vom lasttragenden Bauteil (1) abstehen.

12. Anordnung (10) nach einem der vorherigen Ansprüche, **dadurch gekennzeichnet, dass** die zwei Ansätze (2a, 2b) in einem Abstand von weniger als 30 cm, vorzugsweise weniger als 20 cm, besonders bevorzugst weniger als 10 cm, zueinander angeordnet sind.

13. Anordnung (10) nach einem der vorherigen Ansprüche, **gekennzeichnet durch** zumindest zwei weitere vom lasttragenden Bauteil (1) abstehende Ansätze (2a', 2b') und zumindest eine weitere Sensoreinrichtung (3'), wobei die zumindest eine weitere Sensoreinrichtung (3') mit den zumindest zwei weiteren Ansätzen (2a', 2b') verbunden ist und ausgebildet ist, die Belastung auf Basis einer Veränderungen der relativen Lage der zumindest zwei weiteren Ansätze (2a', 2b') zueinander zu ermitteln.

14. Anordnung (10) nach einem der vorherigen Ansprüche, **dadurch gekennzeichnet, dass** das lasttragende Bauteil (1)
a) ein T-Träger, vorzugsweise ein Doppel-T-Träger, ist und die zwei Ansätze (2a, 2b) an einem mittleren Bereich des T-Trägers befestigt sind; und/oder
b) ein T-Träger, vorzugsweise ein Doppel-T-Träger, ist und die zwei Ansätze (2a, 2b) innerhalb der T-Form, beispielsweise am Steg des T-Trägers, befestigt sind; oder
c) ein Achsgehäuse einer Hypoidachse oder Außenplanetenachse ist.

15. Kraftfahrzeug (20), vorzugsweise Nutzfahrzeug, umfassend eine Anordnung (10) zum Erfassen einer Belastung eines lasttragenden Bauteils (1) des Kraftfahrzeugs (20) nach einem der vorherigen Ansprüche.
